# EUROPÄISCHE PATENTSCHRIFT

(11) **EP 0 700 807 B1**
(45) Veröffentlichungstag und Bekanntmachung des Hinweises auf die Patenterteilung: **08.11.2000**
(21) Anmeldenummer: 95113066.5
(22) Anmeldetag: 19.08.1995
(51) Int. Cl.: B60R 16/02

(54) **Motorraumdose zur Aufnahme elektrischer Bauteile und deren Leitungsanschlüsse**
Motor space box for electric parts and their cable connection
Boîte pour espace moteur pour parties électriques et leurs bornes de connexion

(30) Priorität: 07.09.1994 DE 4431859
(43) Veröffentlichungstag der Anmeldung: 13.03.1996
(73) Patentinhaber: Delphi Automotive Systems Deutschland GmbH, D-42369 Wuppertal (DE)
(72) Erfinder: Hackel, Oliver, Dipl.-Ing., D-42109 Wuppertal (DE); Schekalla, Peter, D-42329 Wuppertal (DE); Koburg, Dirk, Dipl.-Ing., D-42897 Remscheid (DE)
(74) Vertreter: Denton, Michael John

(56) Entgegenhaltungen:
- EP-A- 0 600 272
- DE-C- 4 142 525
- FR-A- 2 254 260

## Beschreibung

Die Erfindung richtet sich auf eine Motorraumdose der im Oberbegriff des Anspruches 1 angegebenen Art. Diese bekannte Dose besteht zunächst aus einem schalenförmigen, im Motorraum befestigten Gehäuse und aus einem die Schalenöffnung des Gehäuses verschließenden Deckel. Derartige Gehäuse müssen den stets knapp bemessenen Restraum neben dem Motor nutzen und sind daher, entsprechend dem verfügbaren Platz, verwinkelt ausgebildet und mit Wandverkröpfungen versehen. Diese komplizierten Formen erschweren beträchtlich die Handhabung der Bauteile und ihrer Leitungsanschlüsse im Doseninneren. Die Anordnung von Trägern für die Bauelemente in mehreren Ebenen ist schwierig. Die im Bodenbereich des Gehäuses ein- und austretenden elektrischen Leitungen erschweren die Befestigung und die Bestückung der Dose.

Um den Dosenraum für die Zuführung der Leitungen besser ausnutzen zu können, hat man bei der bekannten Dose die Gehäusewand mit einem von der Schalenöffnung ausgehenden Ausschnitt versehen, wo hinein dann die elektrische Leitung eingelegt werden konnte. Danach wurde, zum Schutz des Doseninneren, der Ausschnitt mit einem plattenförmigen Schieber verschlossen. Für seine Montage bzw. Demontage am Gehäuse besaß der Schieber an seinen beiden in Schubrichtung weisenden Plattenrändern Profile, denen an denjenigen Wandzonen des Gehäuses, welche den Ausschnitt beidlängsseitig begrenzen, entsprechende Gegenprofile zugeordnet waren. Die Profile und Gegenprofile bestanden aus einer Nut und Feder oder aus einem Vorsprung und einer Anschlagfläche. Die bekannte Dose wies folgende Nachteile auf.

Die Handhabung der Schieber beim Ein- und Ausschub in den Gehäuseausschnitt war schwierig. Es bedurfte beim Einsetzen des Schiebers großer Geschicklichkeit, um die am Schieber befindlichen Profile ordnungsgemäß mit den Gegenprofilen am Gehäuse-Ausschnitt in Eingriff zu bringen. Der bekannte Ausschnitt des Gehäuses und folglich auch der ihn verschließende Schieber waren im wesentlichen auf die gegebene Dimension der im Ausschnitt durchzuführenden elektrischen Leitung beschränkt. Hätte man große Platten für die Schieber verwendet, so kämen die beidrandseitigen Profile in einen so großen Abstand zueinander zu liegen, daß eine gemeinsame Beobachtung des Einführens beider Profile in die zugehörigen beiden Gegenprofile ausgeschlossen ist. Über einen Eckbereich des Gehäuses gehende Ausschnitte konnten nicht verwendet werden, weil dadurch die Eingriffssicherheit der eingekuppelten Profile und der Gegenprofile gefährdet gewesen wäre. Man war auf Ausschnitte und Schieber kleiner Dimensionen angewiesen, welche die Zugänglichkeit zum Doseninneren nur unwesentlich fördern.

Der Erfindung liegt die Aufgabe zugrunde, eine preiswerte, gut abgedichtete Motorraumdose der im Oberbegriff genannten Art zu entwickeln, deren Doseninneres durch ausreichend groß dimensionierbare Schieber bequem zugänglich ist. Darauf aufbauend soll sich beim Einschub der Schieber ins Gehäuse eine bequeme und schnelle Handhabung ergeben.

Dies wird erfindungsgemäß durch die im Kennzeichen des Anspruches 1 angeführten Maßnahmen erreicht, denen folgende besondere Bedeutung zukommt. Durch die V-artig gegeneinander rückgebogenen Gegenprofile am Gehäuse werden dort zueinander gegensinnig verlaufende Widerhaken erzeugt, die im Kupplungsfall eine außerordentlich zuverlässige Verankerung des Schiebers gewährleisten. Diese Widerhaken sind zwischen den noch näher zu beschreibenden beiden Profilelementen an den beiden Plattenrandflächen, im folgenden auch Plattenränder genannt, des Schiebers gefangen. Die V-Scheitel dieser Gegenprofile begrenzen die Längskanten des Ausschnitts und erzeugen einen durchgehenden Führungsschenkel für das Einschieben bzw. Herausziehen des Schiebers. Die beiden Profilelemente des Schieberprofils sind zueinander unterschiedlich ausgebildet und abschnittweise, vorzugsweise im Wechsel miteinander, an den beiden Plattenrändern angeordnet. Es wäre aber auch eine Nebeneinanderlage oder eine Überlappung dieser Profilelemente möglich.

Das erste Profilelement besteht aus einem abgewinkelt den Plattenrand überragenden U-artigen Hakenprofil, weshalb der mit diesem Profilelement erzeugte Abschnitt nachfolgend kurz "Hakenabschnitt" genannt werden soll. Das zweite Profilelement wird von einem parallel zum Plattenrand verlaufenden Leistenprofil gebildet, weshalb der davon gebildete Abschnitt nachfolgend kurz "Leistenabschnitt" bezeichnet werden soll. Der Haken- und Leistenabschnitt können, wie gesagt, zwar im Höhenversatz zueinander angeordnet sein, bilden aber, in längsrandseitiger Projektion gesehen, stets eine V-förmige Aufnahme für das erwähnte, V-artige Gegenprofil des Gehäuses. Der Haken- und Leistenabschnitt wirken wie eine Klaue, die das V-förmige Gegenprofil umgreift. Dadurch ergibt sich ein zuverlässiger Formschluß, der es ohne weiteres erlaubt, sich über mehrere abgewinkelte Wände des Gehäuses erstreckende Schieber zu verwenden. Die beiden Plattenränder des Schiebers können in einem beliebigen Winkel zueinander verlaufen. Mit der Erfindung ist es ohne weiteres möglich, das Gehäuse in zwei Gehäuseteile zu gliedern, wobei ein Gehäuseteil den Schieber bildet. Weitere Ausschnitte erleichtern wesentlich die Bestückung der Dose, werden aber durch den entsprechend groß dimensionierten Schieber zuverlässig abgedichtet.

Bei der Erfindung läßt sich der Einschub der Schieber ins Gehäuse schnell und zuverlässig auszuführen, wenn man, gemäß Anspruch 2, die Haken- und Leistenabschnitte an den beiden Plattenrändern des Schiebers in zueinander gegensätzlicher Reihenfolge anordnet. Beginnend an dem zunächst mit dem Gegenprofil beim Einschub wirksam werdenden, unteren Schieberende befindet sich ein Hakenabschnitt nur an dem einen Plattenrand des Schiebers, während am gegenüberliegenden anderen Plattenrand ein Leistenabschnitt sitzt. Es braucht daher, bei Beginn des Einschubs, nur das Einführen dieses einen Hakenabschnitts am zugeordneten Führungsschenkel vom Gegenprofil des Gehäuses beobachtet zu werden. Dann, wenn bereits diese Kupplung einseitig eingeleitet ist, kann der Schieber mit dem Leistenabschnitt am gegenüberliegenden Plattenrand durch eine Schwenkbewegung des Schiebers an die Außenfläche von der Wandzone des dortigen Gegenprofils in Anlage gebracht werden, um, beim weiteren Vollzug des Einschubs, den an diesem gegenüberliegenden Plattenrand dem Leistenabschnitt folgenden Hakenabschnitt über den dortigen Führungsschenkel zu leiten. Die vorausgehende Anlage mit dem Leistenabschnitt sichert ein zuverlässiges Einfahren des Führungsschenkels in die U-Öffnung des Hakenabschnitts. Der Leistenabschnitt ist also ein Führungselement für eine zuverlässige Kupplung des nachfolgenden Hakenabschnitts. Wegen der beidseitig durchgehenden Führungsschenkel ist schließlich zwangsweise dafür gesorgt, daß die entsprechenden Innenflächen aller weiteren Leisten- und Hakenabschnitte zielgerecht in die beidseitigen Gegenprofile einfahren. Es kommt eine wechselseitige beidseitige Führungswirkung zwischen den erfindungsgemäßen Profilen und Gegenprofilen zustande.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: eine Vorderansicht eines im Motorraum zu befestigenden Gehäuses bei entferntem Schieber und bei vom Gehäuse abgehobenen Deckel, der dort ebenfalls in Vorderansicht gezeigt ist,
- Fig. 2: eine Seitenansicht des Gehäuses und des abgehobenen Deckels von Fig. 1,
- Fig. 3: die Vorderansicht eines als in sich verkröpfte Platte ausgebildeten Schiebers für das Gehäuse von Fig. 1,
- Fig. 4: die entsprechende Seitenansicht des Schiebers von Fig. 3,
- Fig. 5: die Draufsicht auf den Schieber von Fig. 3 bzw. 4 in Blickrichtung des Pfeils V von Fig. 4,
- Fig. 6: in Vergrößerung eine Schnittansicht durch den Plattenrand des Schiebers von Fig. 3 längs der dortigen Schnittlinie VI-VI,
- Fig. 7: in entsprechender Vergrößerung eine Schnittansicht durch die Längskante des Ausschnitts vom Gehäuse längs der Schnittlinie VII-VII von Fig. 2,
- Fig. 8: in Vergrößerung die Endansicht des am oberen Plattenrand des Schiebers befindlichen Hakenabschnitts in Blickrichtung des Pfeils VIII von Fig. 3,
- Fig. 9, 10, 11 und 12: vier zueinander höhenvestzte Querschnitte durch den oberen Hakenabschnitt des Schiebers von Fig. 8 längs der dortigen Schnittlinien IX, X, XI bzw. XII, nachdem seine beiden Profilelemente mit dem entsprechenden Gegenprofil des Gehäuseausschnitts in Eingriff gebracht worden sind,
- Fig. 13: in einer der Fig. 8 entsprechenden vergrößerten Darstellung des am unteren Plattenrand des Schiebers befindlichen Hakenabschnitts die Endansicht in Blickrichtung des Pfeils VIII von Fig. 3 und
- Fig. 14, 15, 16 und 17,: analog zu den Schnitten von Fig. 9 bis 12, höhenversetzte Querschnitte durch den in Fig. 13 gezeigten Hakenabschnitt, wenn dieser mit dem entsprechenden Gegenprofil des Gehäuses in Eingriff gekommen ist, und zwar längs der in Fig. 13 eingezeichneten vier Schnittlinien XIV bis XVII.

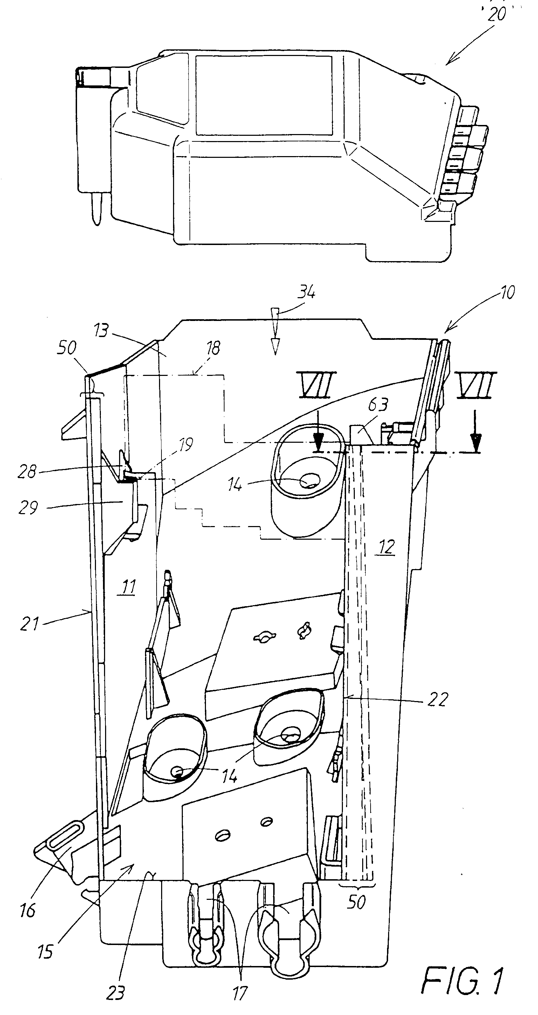

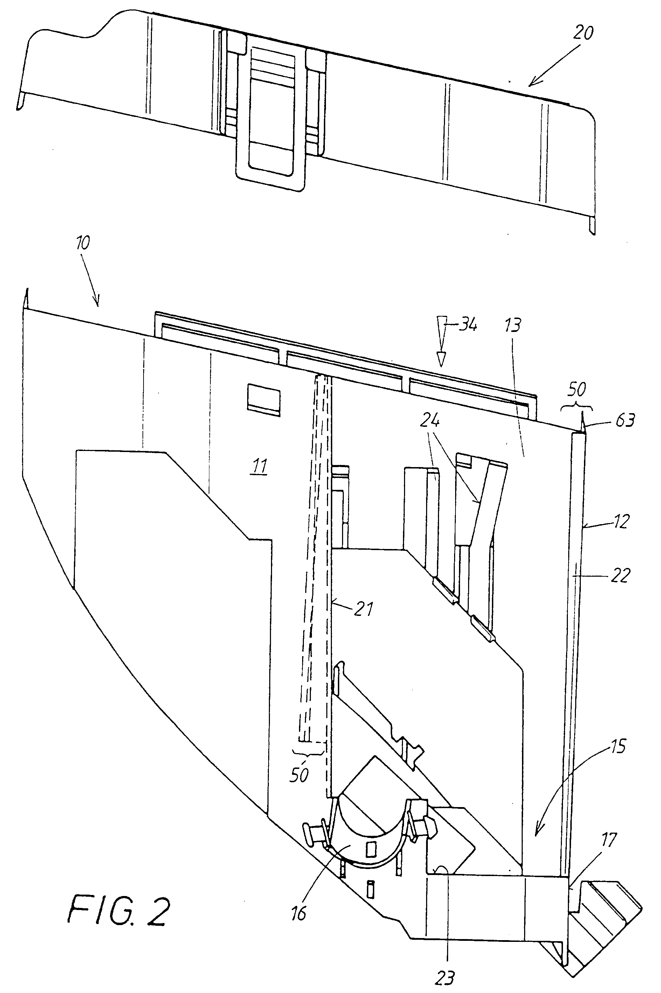

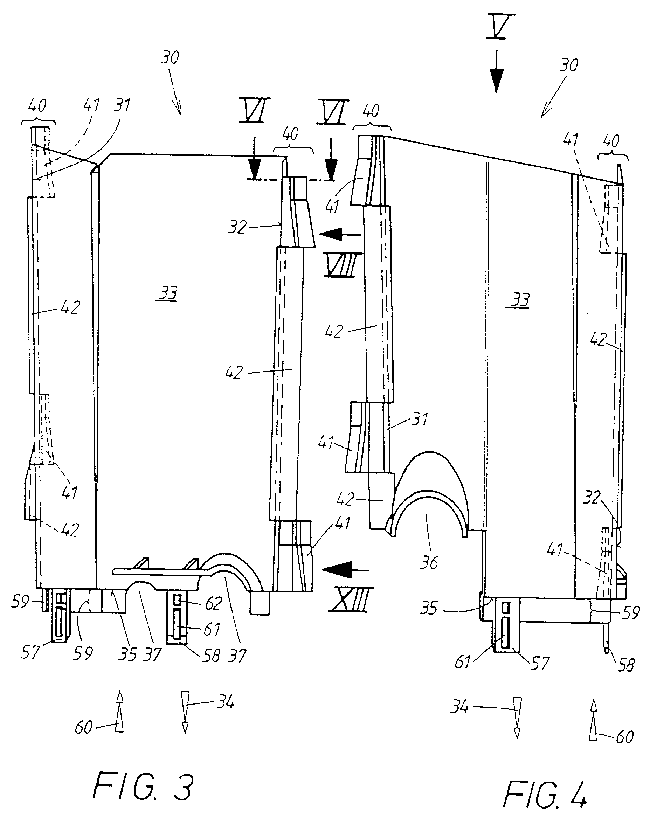

Die Motorraumdose besteht aus insgesamt drei Dosenteilen, nämlich zunächst einem im Motorraum ortsfest zu befestigenden Gehäuse 10, das schalenförmig gestaltet ist und dessen Schalenöffnung 13 mittels eines Deckels 20 verschließbar ist. Wie aus Fig. 1 und 2 zu entnehmen ist, besitzt das Gehäuse 10 einen sich über zwei Wandteile erstreckenden großen Ausschnitt 15, der im Gebrauchsfall von einem aus Fig. 3 bis 5 ersichtlichen Schieber 30 verschlossen ist. Der Schieber 30 besteht aus einer in sich verkröpften Platte 33 und erzeugt somit einen die beiden angrenzenden Wandzonen 11, 12 des Gehäuses 10 fortsetzenden weiteren Gehäuseteil, welcher somit den erwähnten dritten Dosenteil bildet. Zu den beiden Wandzonen 11, 12 hin ist der Ausschnitt 15 von zwei zueinander geneigt verlaufenden, besonders ausgebildeten Längskanten 21, 22 begrenzt und besitzt an seinem unteren Ende eine im wesentlichen horizontale innere Kante 23, die mit zwei unterschiedlich dimensionierten Ausbrüchen 16, 17 versehen ist, an welchen sich U-förmige Kanäle befinden. Diese Kanäle dienen zur Aufnahme von sämtlichen ins Doseninnere einzuführenden elektrischen Leitungen. Dementsprechend ist auch die verkröpfte Platte 33 des Schiebers 30, gemäß Fig. 3 und 4, an seinem Unterende 35 mit zwei zugehörigen Ausbrüchen 36, 37 versehen, welche die gehäuseseitigen Ausbrüche 16, 17 zu einem gemeinsamen Durchbruch komplettieren.

Das Gehäuse 10 besitzt Montagelöcher 14 zu seiner Befestigung im Bereich des Motorraums. Durch den Ausschnitt 15 ist das Doseninnere zur Anordnung von Bauteilen und zum Ein- bzw. Ausführen der elektrischen Leitungen in die nach oben offenen Gehäuseausbrüchen 16, 17 bequem zugänglich. Das Doseninnere kann ebenso bequem, durch den Ausschnitt 15 hindurch, beispielsweise mit Kupplungen, Sicherungen, Relais bestückt werden, die in einem strichpunktiert in Fig. 1 angedeuteten Träger 18 für elektrische Bauteile zusammengefaßt sein können. Die eine Trägerkante wird über Steckverbindungen im Inneren der einen Gehäusewand positioniert, wofür die gehäuseseitigen Elemente 24 im offenen Ausschnitt 15 von Fig. 2 zu erkennen sind. Der gegenüberliegende Trägerrand 19 stützt sich dagegen an einer an der Innenfläche der dortigen Wandzone 11 angeformten Konsole 29 ab. An der Konsole 29 sitzt ein Riegelgesperre 28, das hier aus einer mit einem endseitigen Riegelhaken versehenen federnden Zunge besteht. Die Bestückung der Dose mit dem vormontierten Träger 18 kann also bequem von der Schalenöffnung 13 aus erfolgen, weil in dieser Richtung sowohl die Steckverbindung 24 als auch das Riegelgesperre 28 sich selbsttätig wirksam setzen. Die federnde Zunge des Riegelgesperres 28 läßt sich auch ohne weiteres manuell, von der Schalenöffnung 13 aus, betätigen, wenn der Träger 18 demontiert werden soll.

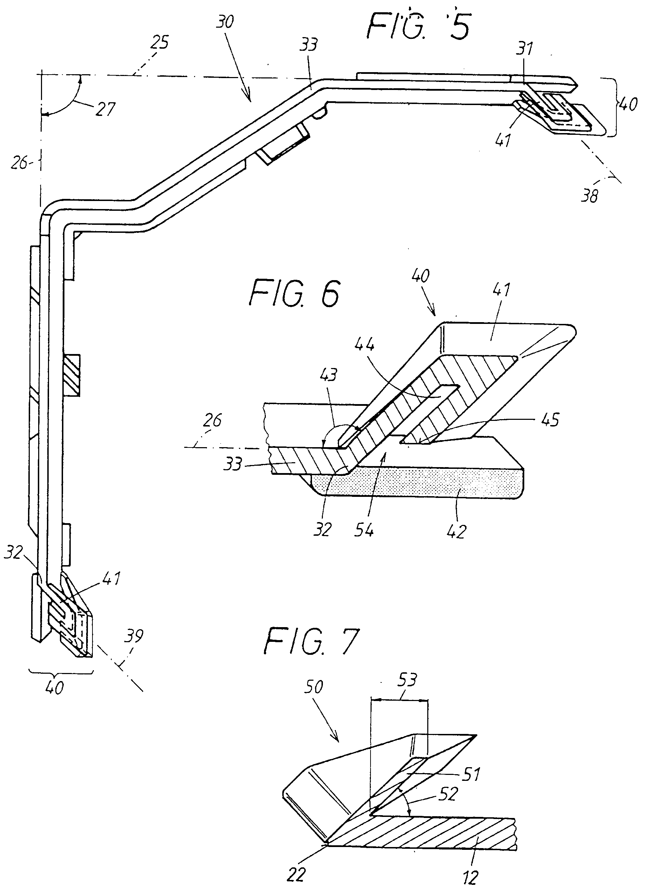

Bei fest eingebautem Gehäuse 10 läßt sich auch der Schieber 30 leicht und schnell montieren und demontieren, wobei der Schieber 30 in seiner Montagestellung außerordentlich zuverlässig festgehalten wird. Von noch näher zu beschreibenden Details abgesehen, vollzieht sich die Montage des Schiebers 30 im Ausschnitt 15 im wesentlichen in der durch den Pfeil 34 in Fig. 1 veranschaulichten Schubrichtung. Diese Schubrichtung 34 ist auch in Fig. 3 und 4 eingezeichnet. Diese einfache, zuverlässige Handhabung des Schiebers 30 ergibt sich wegen der besonderen Ausbildung von schieberseitigen Profilen 40 einerseits und gehäuseseitigen Gegenprofilen 50 andererseits. Die Profile 40 befinden sich an den beiden, in Schubrichtung weisenden Plattenrandflächen 31, 32, auch im folgenden Plattenränder genannt, wie am besten aus Fig. 5 hervorgeht. Die gehäuseseitigen Gegenprofile 50 befinden sich an den erwähnten Längskanten 21, 22 des Ausschnitts 15 und haben folgendes, am besten aus Fig. 7 ersichtliches Aussehen.

Weil beide Gegenprofile 50 einen im wesentlichen gleichen Aufbau aufweisen, genügt es, lediglich das eine, an der Wandzone 12 befindliche Gegenprofil 50 zu betrachten. Das Gegenprofil 50 ist, gemäß Fig. 7, durch eine V-artige Rückbiegung von Wandteilen erzeugt, weshalb ein rückgebogener V-Schenkel 51 entsteht, der zwar durchgehend ausgebildet ist, aber ein sich noch näher zu beschreibendes, kontinuierlich veränderndes V-Profil aufweist. Dieser freie V-Schenkel 51 soll nachfolgend kurz "Führungsschenkel" benannt werden. Der andere V-Schenkel wird von der jeweiligen Wandzone 12 selbst gebildet. Der V-Scheitel bildet jeweils die Längskante 22 bzw. 21 des Ausschnitts 15. In Fig. 7 ist auch der Neigungswinkel 52 des V-Profils eingezeichnet, der sich aber, wie schon die perspektivische Ansicht von Fig. 7 zeigt, entlang der Kante 22 zum unteren Ende des Gegenprofils 50 hin verkleinern kann. Es verändert sich auch die Tiefe 53 der V-Nut.

Das schieberseitige Profil 40 dagegen besteht zunächst aus zwei unterschiedlichen Profilelementen 41, 42, deren Form am besten aus Fig. 6 zu entnehmen ist. Diese beiden Profilelemente 41, 42 sind aber nicht durchgehend, sondern in Form von Abschnitten ausgebildet und sollen, wegen ihrer noch näher zu beschreibenden besonderen Profilform, nachfolgend kurz "Hakenabschnitt" bei 41 und "Leistenabschnitt" bei 42 bezeichnet werden. Diese Abschnitte 41, 42 sind im Höhenvesatz zueinander angeordnet, und zwar vorzugsweise im Wechsel miteinander.

Der Hakenabschnitt 41 besteht, wie aus der Schnittführung in Fig. 6 zu erkennen ist, aus einem den Plattenrand 32 des Schiebers überragenden U-artigen Hakenprofil, welches eine Hakenöffnung 44 aufweist. Die Hakenöffnung 44 ist in Verlaufsrichtung des Abschnitts veränderlich profiliert und dient im Kupplungsfall zur Aufnahme des Führungsschenkels 51. Der Hakenabschnitt 41 ist also mit einem zum Neigungswinkel 52 des gehäuseseitigen Führungsschenkels 51 entsprechenden Komplementärwinkel 43 zur Ebene 25 der angrenzenden Schieber-Platte 33 angeordnet.

Der Leistenabschnitt 42 besteht, ausweislich der Fig. 6, aus einem gegenüber dem Plattenrand 33 zwar vorspringenden, aber parallel zur Ebene der Schieber-Platte 33 verlaufenden Leistenprofil, welches, zwecks besserer Deutlichkeit, in Fig. 6 punktschraffiert ist. Der Leistenabschnitt 42 ist nämlich, wie aus Fig. 3, 4 zu entnehmen ist, stets zum Hakenabschnitt 41 höhenversetzt angeordnet, weshalb er von der Schnittführung in Fig. 6 nicht erfaßt wird. In der vertikalen Projektion von Fig. 6 schließen die beiden Abschnitte 41, 42 jedoch eine V-förmige Aufnahme 54 zwischen sich ein, die dem V-förmigen Gegenprofil 50 angepaßt ist. Die beiden Abschnitte 41, 42 stehen einander klauenartig gegenüber. Dem Hakenende 45 des Hakenabschnitts 41, wo sich die Hakenöffnung 44 öffnet, liegt, in vertikaler Projektion gesehen, der Leistenabschnitt 42 gegenüber.

Wie bereits erwähnt wurde und aus Fig. 3, 4 zu ersehen ist, sind die beiden Abschnitte 41, 42 stets im Wechsel zueinander angeordnet, und zwar an den beiden Plattenrändern 31, 32 in zueinander gegensätzlicher Weise. In Einschubrichtung 34 von Fig. 3 bzw. 4 gesehen, befindet sich an dem einen Plattenrand 32 zuerst ein Hakenabschnitt 41, während am gegenüberliegenden anderen Plattenrand 31 zunächst ein Leistenabschnitt 42 angeordnet ist. Dann erst folgt am erstgenannten Plattenrand 32 ein Leistenabschnitt 42, während am gegenüberliegenden zweiten Plattenrand 31 sich der dortige erste Hakenabschnitt 41 anschließt. Insgesamt sind beide Plattenränder 31, 32 jeweils mit zwei Hakenabschnitten 41 versehen, zwischen denen jeweils ein Leistenabschnitt 42 von zueinander unterschiedlicher Länge angeordnet ist. Wie aus Fig. 3, 4 hervorgeht, liegen alle Abschnitte 41, 42 der beidseitigen Ränder 31, 32 im Höhenversatz zueinander, was beim Einschieben 34 eine günstige, versetzte Folge des Kupplungseingriffs bedingt.

So braucht beim Kuppeln des Schiebers 30 im Gehäuseausschnitt 15 zunächst nur der am Plattenrand 32 befindliche erste Hakenabschnitt 41 mit dem Gegenprofil 50 an der Längskante 22 gekuppelt zu werden. Um diesen Vorgang zu erleichtern, ist die dortige Wandzone 12 mit einem spitzen Finger 63, gemäß Fig. 1 und 2 versehen, welcher dort eine bequeme Einfädelung in die Hakenöffnung 44 des Hakenabschnitts 41 erlaubt. Um den anderen Plattenrand 31 braucht sich die Bedienungsperson zunächst gar nicht zu kümmern. Erst, wenn der Einschub 34 in ausreichender Weise vollzogen worden ist, genügt es, die Schieber-Platte 33 im Bereich des Plattenrandes 31 an die Außenfläche der Wandzone 11 angedrückt zu halten, wobei dann der erwähnte, dort vorauseilende kurze Leistenabschnitt 42 als Anschlag wirkt. Dies kann durch eine entsprechende leichte Schwenkbewegung des Schiebers 30 um den eingekuppelten Hakenabschnitt 41 seines ersten Plattenrandes 32 geschehen. Dann wirkt, beim weiteren Einschub 34, der Leistenabschnitt 42 als Führungselement und sorgt selbsttätig dafür, daß der versetzte Hakenabschnitt 41 des zweiten Plattenrandes 31 auf das Gegenprofil 50 an der Ausschnitt-Längskante 21 fährt. Die eingekuppelten Abschnitte sorgen als Leitorgane dafür, daß auch die beiden weiteren, an den Oberenden der beiden Plattenränder 31, 32 befindlichen weiteren Hakenabschnitte 41 narrensicher mit ihrem jeweiligen Gegenprofil 50 in Eingriff kommen. Während der Plattenrand 32 einen langen Leistenabschnitt 42 zwischen den endseitig am Plattenrand 32 angeordneten Hakenabschnitten 41 aufweist, besitzt der andere Plattenrand 31 eingangs einen kurzen Leistenabschnitt 42 und dann einen etwas längeren mittleren Leistenabschnitt 42 zwischen den dort näher beieinander stehenden beiden Hakenabschnitten 41.

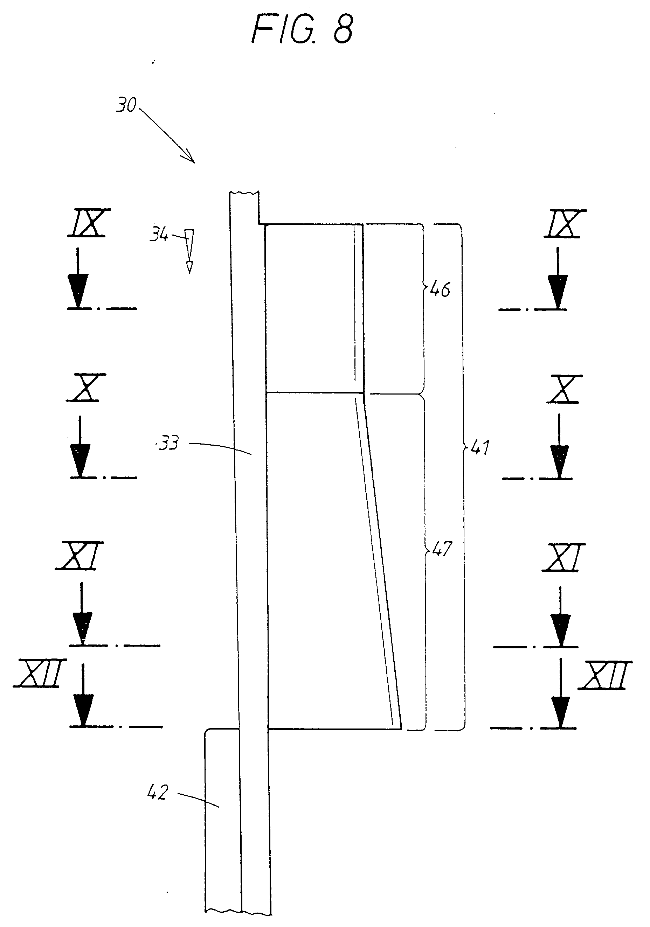

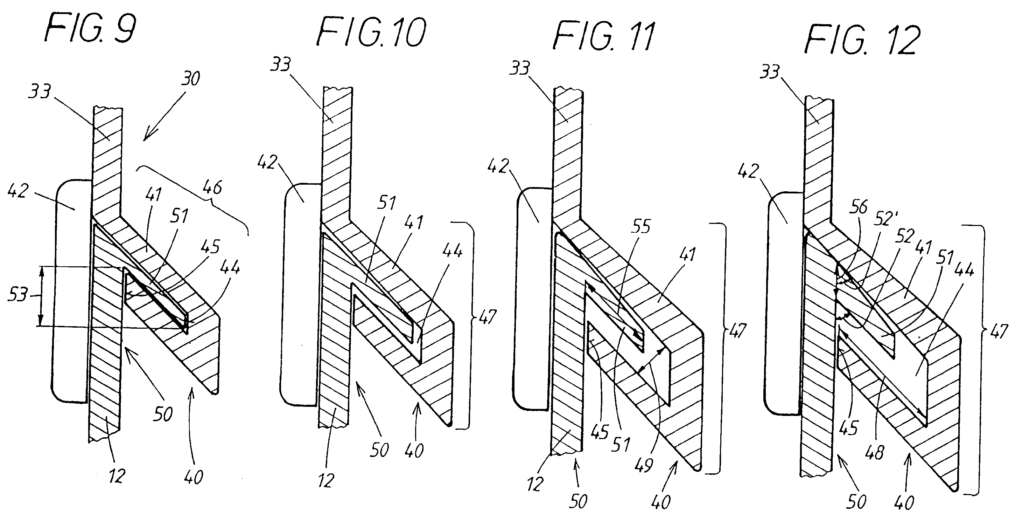

Wie am besten aus Fig. 8 zu entnehmen ist, ist der Hakenabschnitt 41 seinerseits in zwei zueinander unterschiedlich profilierte Teilstücke 46, 47 gegliedert. In der kuppelungswirksamen Einschubrichtung 34 gesehen, befindet sich am Hakenabschnitt 41 zunächst ein in Längsrichtung konisch profiliertes Anfangsstück 47, dem sich dann ein gleichförmig profiliertes kontinuierliches Endstück 46 anschließt. Das Aussehen der Profilierungen ergibt sich aus den Fig. 9 bis 12, die, wie bereits erwähnt wurde, längs der in Fig. 8 angedeuteten Schnitte IX bis XII ausgeführt worden sind und die bereits den fertig gekuppelten Zustand mit dem Gegenprofil 20 veranschaulichen. Fig. 8 bis 12 zeigen den am Oberende des Schiebers 30 befindlichen Hakenabschnitt 41 und den dazu höhenversetzten Leistenabschnitt 42 des Profils 40.

Bei eingekuppeltem Gegenprofil 50 liegt eine Flächenberührung zwischen dem gehäuseseitigen Führungsschenkel 51 mit den Innenflächen in der Hakenöffnung 44 lediglich innerhalb des kontinuierlichen Endstücks 46 gemäß Fig. 9 vor. Ausweislich der in Fig. 10 bis 12 dargestellten Querschnitte durch das konische Anfangsstück 47 liegt zwischen dem Führungsschenkel 51 einerseits und den Innenflächen der Hakenöffnung 44 andererseits ein zunehmendes Spiel vor, weil sich dort die Hakenöffnung 44 innerhalb des sich zunehmend erweiternden Hakenprofils vergrößert. Zum unteren Ende des Hakenabschnitts 41 hin wächst, wie aus Fig. 11 und 12 zu ersehen ist, sowohl die lichte U-Weite 49 als auch die U-Tiefe 48 der Hakenöffnung 44 an. Im zugehörigen oberen Bereich des Gegenprofils 50 bleiben der Neigungswinkel 52, gemäß Fig. 12, und die Schenkellänge 55, gemäß Fig. 11, über die ganze Länge dieses oberen Hakenabschnitts 41 im wesentlichen unverändert, doch wächst die Schenkeldicke 56 wenigstens an einzelnen Stellen an, wie aus Fig. 12 zu ersehen ist. Dadurch kommt es zu einem Knick innerhalb der Außenfläche des Führungsschenkels 51 und folglich zu einer punktuellen Berührung mit der entsprechenden Innenfläche in der Hakenöffnung 44. Ausweislich der Fig. 12 kann der Neigungswinkel 52' der Außenfläche vom Führungsschenkel 51 aber auch zunehmend flacher werden. Im gekuppelten Zustand, gemäß Fig. 9 bis 12, liegt die jeweilige Wandzone 12 mit dem angrenzenden Bereich der Schieberplatte 33 in der gleichen Ebene.

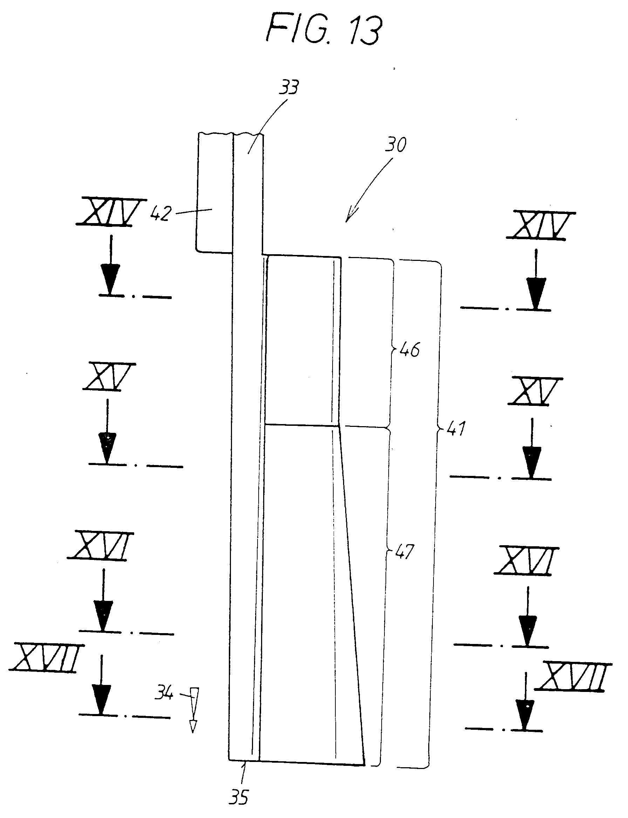

Trotz der genannten Profil-Änderung bleibt aber der klauenartige Umgriff der beiden schieberseitigen Profilelemente 41, 42 erhalten. In sämtlichen Querschnitten IX bis XII liegt, gemäß Fig. 9 bis 12, die Innenfläche des Leistenabschnitts 42 an der Außenfläche der gehäuseseitigen Wandzone 12 an, während die Stirnfläche am Hakenende 45 stets die Innenfläche dieser Wandzone 12 berührt. Das gilt auch für den unteren Hakenabschnitt von Fig. 13 bis 17, obwohl dort gegenüber dem oberen Hakenabschnitt abgewandelte Profil formen wirksam sind.

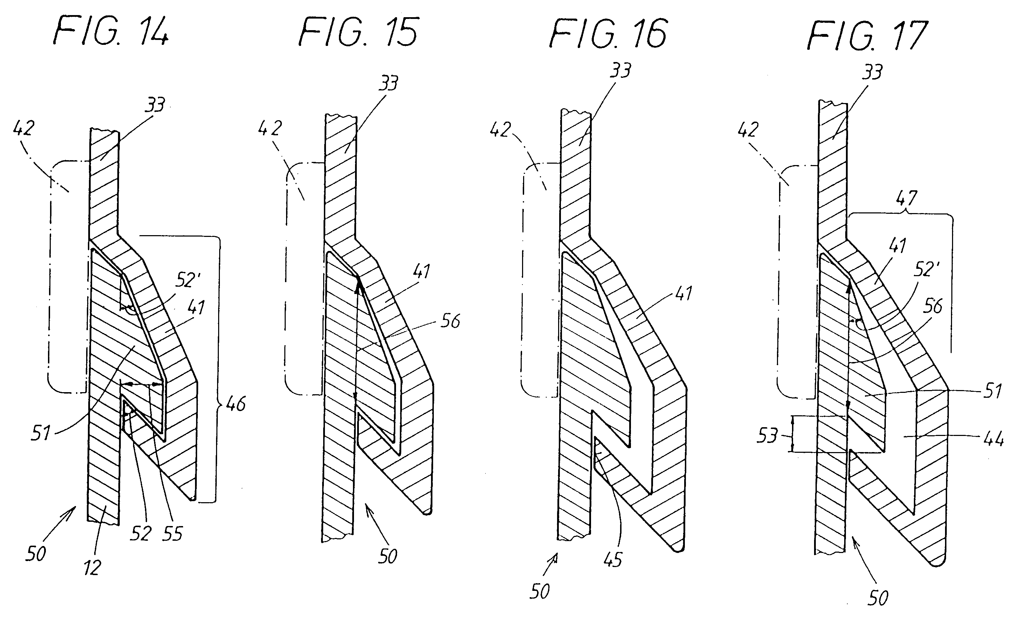

Wie bereits erwähnt wurde, zeigen die Fig. 13 und 14, in Analogie zu den beschriebenen Fig. 8 bis 12, die entsprechenden Verhältnisse bei dem in Fig. 3 und 4 jeweils vorauseilenden unteren Hakenabschnitt 41, wenn dort der entsprechende untere Bereich vom Gegenprofil 50 eingekuppelt ist. Es gilt daher im wesentlichen die bisherige Beschreibung, doch sind folgende Abweichungen festzustellen.

In diesem unteren Bereich des Gegenprofils 50 hat sich, wie z. B. ein Vergleich zwischen den beiden, jeweils das Endstück 46 der Hakenabschnitte betreffenden Querschnitte in Fig. 9 und 14 zeigt, die Schenkellänge 55 in Fig. 14 beträchtlich verkürzt. Ferner ist, ausweislich der Fig. 15, die Schenkeldicke 56 an sich größer geworden, verjüngt sich aber jeweils zum freien Schenkelende hin. Der an der Innenfläche des Führungsschenkels 51 liegende Neigungswinkel 52 ist zwar im wesentlichen unverändert geblieben, aber die gegenüberliegende Außenfläche des Führungsschenkels 51 besitzt einen wesentlich flacheren Neigungswinkel 52', gemäß Fig. 14, der sogar, wie ein Vergleich mit Fig. 17 lehrt, zum unteren Ende dieses Hakenabschnitts 41 zunehmend flacher wird. Zum freien Ende des Führungsschenkels 51 hin nimmt auch die Schenkeldicke 56 kontinuierlich ab.

Vergleicht man die Querschnittsformen des Gegenprofils 50 am äußeren Ende des Ausschnitts gemäß Fig. 9 mit denjenigen vom inneren Ende des Gehäuse-Ausschnitts von Fig. 17, so erkennt man die keilförmig anwachsende Schenkeldicke 56, die auf Kosten der aus Fig. 17 ersichtlichen Nuttiefe 53 geht. Die beidflächige Berührung der gehäuseseitigen Wandzone 12 mit der Stirnfläche des Hakenendes 45 einerseits und der Innenfläche des Leistenabschnittes 42 andererseits liegt aber, wie schon gesagt wurde, auch bei diesem unteren Hakenabschnitt 41 vor. Ferner ist die vollflächige Berührung zwischen dem gehäuseseitigen Führungsschenkel 51 und den Innenflächen der Hakenöffnung 44 im Bereich des gleichförmigen Endstücks 46 von Fig. 14 gewährleistet. Das freie Spiel des Führungsschenkels 51 innerhalb der Hakenöffnung 44 wächst zum Eintrittsende des konischen Anfangsstücks 47, gemäß Fig. 17, stark an.

Es versteht sich, daß die Zuordnung der beschriebenen Profile 40 und Gegenprofile 50 zu den Wandzonen 11, 12 einerseits und den Ausschnittkanten 21, 22 in spiegelbildlicher Weise vollzogen sein könnte. So wäre es möglich, die beschriebenen Haken- und Leistenabschnitte 41, 42 gehäuseseitig vorzusehen, während dann der durchgehende Führungsschenkel 51 schieberseitig angeordnet wäre. Die Erfindung erfaßt also auch eine solche Profil-Gegenprofil-Umkehr.

Die in Fig. 5 gezeigte Schieber-Platte 33 hat eine den gegebenen Platzverhältnissen im Motorraum entsprechend verkröpfte Form. Die Platte 33 ist nicht nur großflächig ausgebildet, sondern erstreckt sich sogar über einen Eckbereich der fertigen Dose. Die beiden Plattenränder 31, 32 können ohne weiteres in den strichpunktiert in Fig. 5 angedeuteten, unterschiedlichen Ebenen 25, 26 liegen und z. B., wie im vorliegenden Fall, einen rechten Winkel 27 miteinander einschließen. Die an den beiden Plattenrändern 31, 32 befindlichen Hakenabschnitte 41 können zwar in den beiden etwa parallelen Ebenen 38, 39 von Fig. 2 liegen, weisen aber, bezogen auf die angrenzenden Bereiche der Platte 33, jeweils nach außen. Fahren in die jeweiligen Hakenöffnungen 44 die Führungsschenkel 51 des gehäuseseitigen Gegenprofils 50 ein, so kommt es zu einer gegenseitigen Verkrallung, durch welche die beidseitigen, aus Fig. 1 oder 2 ersichtlichen Längskanten 21, 22 des Ausschnitts 15 gegeneinander gezogen werden.

In voller Einschublage wird der Schieber 30 durch ein Rastgesperre im Gehäuse 10 festgehalten. Dazu dienen z. B. die das Unterende 59 des Schiebers 30 überragenden Zungen 57, 58, die mit nicht näher erkennbaren, an der Innenfläche des Gehäuses unterhalb der Innenkante 23 von Fig. 1 befindlichen Rastvorsprüngen zusammenwirken. Die Zungen 57, 58 besitzen zwei höhenunterschiedliche Öffnungen 61, 62, welche einer Vorraststellung und einer Endraststellung dieses Gesperres bewirken. Die Elemente dieses Rastgesperres sind aber wieder voneinander lösbar, wenn, zwecks Demontage des Schiebers 30, eine im Aushebesinne, in Richtung der Pfeile 60 von Fig. 3 bzw. 4 wirksame Kraft ausgeübt wird, die der vorbeschriebenen Einschubrichtung 34 entgegengesetzt ist. Der Schieber 30 läßt sich daher zur Schalenöffnung 13 hin ohne weiteres wieder vertikal aus dem Gehäuse 10 herausziehen. Das Gegenprofil 50 wirkt auch beim Herausziehen 60 wie eine Führungsschiene für die schieberseitigen Profilelemente 41, 42.

Ausweislich der Fig. 3, 4 besitzt der Schieber 30 an seinem Unterende 35 einen abgesetzten Randstreifen 59, der im Kupplungsfall hinter die innere Kante 23 des Gehäuse-Ausschnitts 15 von Fig. 1 bzw. 2 fährt. Die vorbeschriebenen Ausbrüche 37 zum Durchführen von elektrischen Leitungen am Schieber-Unterende 35 durchsetzen auch diesen Randstreifen 59.

Durch das in Anspruch 16 erwähnte Spiel ist eine besonders leichtgängige Montage des Schiebers 30 im Gehäuse 10 möglich. Dies gilt auch für die Demontage.

### Bezugszeichenliste:

- 10: Gehäuse
- 11: erste Wandzone von 10
- 12: zweite Wandzone von 10
- 13: Schalenöffnung
- 14: Montageloch für 10
- 15: Ausschnitt in 10
- 16: Ausbruch von 10 bei 23
- 17: Ausbruch von 10 bei 23
- 18: Träger für elektrische Bauteile
- 19: Trägerrand von 18
- 20: Deckel
- 21: erste Längskante von 15 bei 11
- 22: zweite Längskante von 15 bei 12
- 23: innere Kante von 15
- 24: Steckverbindungselement für 18 (Fig. 2)
- 25: Ebene von 31 (Fig. 5)
- 26: Ebene von 32 (Fig. 5)
- 27: Winkel zwischen 25, 26
- 28: Riegelgesperre an 29 (Fig. 1)
- 29: Konsole für 19 (Fig. 1)
- 30: Schieber
- 31: erster Plattenrand von 30
- 32: zweiter Plattenrand von 30
- 33: verkröpfte Platte von 30
- 34: Einschubrichtungs-Pfeil von 30
- 35: Unterende von 30
- 36: erster Ausbruch in 33
- 37: weiterer Ausbruch in 33
- 38: Ebene von 41 bei 31 (Fig. 5)
- 39: Ebene von 41 bei 32 (fig. 5)
- 40: Profil von 30
- 41: erstes Profilelement von 40, Hakenabschnitt
- 42: zweites Profilelement von 40, Leistenabschnitt
- 43: Abwinkelung von 41, Komplementärwinkel zu 52 (Fig. 6)
- 44: Hakenöffnung von 41
- 45: Hakenende von 41
- 46: erstes Teilstück von 41, gleichförmiges Endstück
- 47: zweites Teilstück von 41, konisches Anfangsstück
- 48: U-Tiefe von 44
- 49: U-Weite von 44
- 50: V-artiges Gegenprofil bei 10
- 51: Führungsschenkel von 50
- 52: Neigungswinkel an der Innenfläche von 51 gegenüber 12
- 52': Neigungswinkel an der Außenfläche von 51 gegenüber 12
- 53: V-Nuttiefe von 50
- 54: V-förmige Aufnahme zwischen 41, 42 (Fig. 6)
- 55: Schenkellänge von 51
- 56: Schenkeldicke von 51
- 57: Zunge des Rastgesperres für 30
- 58: Zunge des Rastgesperres für 30
- 59: abgesetzter Randstreifen bei 35
- 60: Ausheberichtungs-Pfeil (Fig. 3, 4)
- 61: Öffnung für Vorraststellung in 57, 58
- 62: Öffnung für Endraststellung in 57, 58
- 63: Finger an 10

## Patentansprüche

1. Motorraumdose zur Aufnahme elektrischer Bauteile, wie Kupplungen, Sicherungen, Relais od. dgl., und deren Leitungsanschlüsse,
mit einem schalenförmigen eine Schalenöffnung (13) aufweisenden, im Motorraum befestigbaren Gehäuse (10), welches zum Durchführen von elektrischen Leitungen Durchbrüche (16, 36; 17, 37) in seiner Wand aufweist,
mit einem die Schalenöffnung (13) des Gehäuses (10) verschließenden Deckel (20),
mit einem von der Schalenöffnung (13) ausgehenden Ausschnitt (15) in der Gehäusewand und mit einem den Ausschnitt (15) verschließenden plattenförmigen Schieber (30), der vom Gehäuse (10) lösbar ist,
wobei der Schieber (30) an seinen beiden, in Schubrichtung (34) weisenden Plattenrändern (31, 32) Profile (40) aufweist, denen Gegenprofile (50) in jenen Wandzonen (11, 12) des Gehäuses (10) zugeordnet sind, welche den Ausschnitt (15) beidlängsseitig begrenzen,
**dadurch gekennzeichnet**
daß die beiden Gegenprofile (50) am Gehäuse (10) V-artig ausgebildet sind, deren einer V-Schenkel jeweils von den beiden Wandzonen (11, 12) des Gehäuses selbst erzeugt ist, deren beide V-Scheitel die beiden Längskanten (21, 22) des Ausschnitts (15) bestimmen und deren anderer freier V-Schenkel jeweils, von der Ausschnitt-Längskante (21, 22) wegweisend, zurückgebogen ist und jeweils einen durchgehenden Führungsschenkel (51) für das ihm zugeordnete Profile (40) vom Schieber (30) bildet,
und daß die Profile (40) an den beiden Plattenrandflächen (31, 32) des Schiebers (30) jeweils aus zwei unterschiedlichen Profilelementen kombiniert sind,
wobei das erste Profilelement aus einem die Plattenrandfläche (31 bzw. 32) des Schiebers (30) überragenden, abgewinkelt zur Ebene (25, 26) der Plattenrandfläche (31, 32) verlaufenden U-artigen Hakenprofil (41) besteht,
während das zweite Profilelement von einem vorspringenden, parallel zur Plattenrandfläche (32, 31) verlaufenden Leistenprofil (42) gebildet ist, welches - in längsrandseitiger Projektion gesehen - mit dem Hakenprofil (41) eine V-förmige Aufnahme (54) für das Gegenprofil (50) des Gehäuses (10) bildet.

2. Dose nach Anspruch 1, dadurch gekennzeichnet, daß die beiden Profilelemente (41, 42) an beiden Plattenrandflächen (31, 32) abschnittweise und miteinander im Wechsel angeordnet sind,
und, in Einschubrichtung (34) gesehen, an der einen Plattenrandfläche (32) des Schiebers (30) zuerst ein Abschnitt des Hakenprofils (41) angeordnet ist, dem sich dann ein Abschnitt des Leistenprofils (42) anschließt,
aber an der Plattenrandfläche (31) des Schiebers (30), umgekehrt, sich zunächst ein Abschnitt des Leistenprofils (42) befindet, dem ein Abschnitt des Hakenabprofils (41) folgt.

3. Dose nach Anspruch 1 oder 2, dadurch gekennzeichnet, daß der Abschnitt des Hakenprofils (41) des Schiebers (30) seinerseits aus zwei unterschiedlich profilierten Teilstücken (46, 47) besteht, nämlich, in Einschubrichtung (34) gesehen, zunächst aus einem konisch profilierten Anfangsstück (47) und dann aus einem gleichförmig profilierten Endstück (46), (Fig. 8 und 13).

4. Dose nach einem oder mehreren der Ansprüche 1 bis 3, dadurch gekennzeichnet, daß im konischen Anfangsstück (47) die Hakenöffnung (44) des U-artigen Hakenprofils (41) sich sowohl hinsichtlich der lichten U-Weite (49) als auch hinsichtlich der lichten U-Tiefe (53) zum Endstück (46) hin verjüngt, (Fig. 9 bis 12).

5. Dose nach einem oder mehreren der Ansprüche 1 bis 4, dadurch gekennzeichnet, daß in Einschublage des Schiebers (30) die Innenfläche seines Abschnitts mit Leistenprofil (42) einerseits und die Stirnfläche am Hakenende (45) seines Abschnitts mit Hakenprofil (41) andererseits die Innen- und Außenfläche der zum Gegenprofil (50) des Gehäuses (10) gehörenden Wandzone (12) berühren, (Fig. 9 bis 12).

6. Dose nach einem oder mehreren der Ansprüche 1 bis 5, dadurch gekennzeichnet, daß in Einschublage des Schiebers (30) gesehen, der Führungsschenkel (51) vom Gegenprofil (50) des Gehäuses (10) zwar im Endstück (46) des Abschnitts mit Hakenprofil (41) mit den Innenflächen des U-förmigen Hakenprofils in Berührung steht, aber zu den Innenflächen vom konischen Anfangsstück (47) des Abschnitts mit Hakenprofil (41) wenigstens bereichsweise ein seitliches Spiel aufweist, (Fig. 9 und 12).

7. Dose nach einem oder mehreren der Ansprüche 1 bis 6, dadurch gekennzeichnet, daß - in Einschubrichtung (34) des Schiebers (30) gesehen - der Führungsschenkel (51) des V-artigen Gegenprofils (50) ein sich hinsichtlich der Schenkellänge (55) und/oder der Schenkeldicke (56) und/oder der Schenkelneigung (52, 52') kontinuierlich veränderndes Schenkelprofil aufweist.

8. Dose nach Anspruch 7, dadurch gekennzeichnet, daß die V-Nut des Gegenprofils (50) am inneren Ende des Gehäuse-Ausschnitts (15) eine kleinere Nuttiefe (53) aufweist als am gegenüberliegenden äußeren Ende des Ausschnitts, (Fig. 9 und 17).

9. Dose nach Anspruch 7 oder 8, dadurch gekennzeichnet, daß der Führungsschenkel (51) des V-artigen Gegenprofils (50) eine vom inneren Ende des Ausschnitts (15) aus zum gegenüberliegenden äußeren Ausschnitt-Ende hin keilförmig anwachsende Schenkeldicke (56) aufweist, (Fig. 12 und 15).

10. Dose nach einem oder mehreren der Ansprüche 1 bis 9, dadurch gekennzeichnet, daß an beiden Plattenrandflächen (31, 32) des Schiebers (30) jeweils zwei Abschnitte mit Hakenprofil (41) sitzen, zwischen denen ein Abschnitt mit Leistenprofil (42) angeordnet ist, (Fig. 3 und 4).

11. Dose nach einem oder mehreren der Ansprüche 1 bis 10 , dadurch gekennzeichnet, daß am, in Einschubrichtung (34) des Schiebers (30) gesehen, oberen Ende der beiden Plattenrandflächen (31, 32) des Schiebers (30) jeweils Abschnitte mit Hakenprofil (41) sitzen, (Fig. 3, 4).

12. Dose nach einem oder mehreren der Ansprüche 1 bis 11, dadurch gekennzeichnet, daß die Dose in einer zu Anspruch 1 spiegelbildlichen Weise ausgebildet ist, und zwar die Plattenrandflächen des Schiebers V-artig gegeneinander rückgebogen sind und jeweils einen durchgehenden Führungsschenkel bilden, während die am Gehäuse befindlichen Gegenprofile aus im wesentlichen im Wechsel zueinander angeordneten Abschnitten mit U-artigem Hakenprofil und aus parallel zur Wandzone verlaufenden Abschnitten mit Leistenprofil bestehen.

13. Dose nach einem oder mehreren der Ansprüche 1 bis 12, dadurch gekennzeichnet, daß der Schieber (30) eine unebene, vorzugsweise in sich verkröpfte Platte (33) aufweist und seine beiden profilierten Plattenflächen (31, 32) im Winkel (27) zueinander verlaufen, (Fig. 5).

14. Dose nach einem oder mehreren der Ansprüche 1 bis 13, dadurch gekennzeichnet, daß sämtliche Durchbrüche zum Durchführen von elektrischen Leitungen aus einander paarweise komplementierenden Ausbrüchen (16, 36; 17, 37) an der inneren Kante (23) des Gehäuse-Ausschnitts (15) einerseits und dem unteren Plattenrand (35) des Schiebers (30) andererseits bestehen, (Fig. 1 bis 4).

15. Dose nach einem oder mehreren der Ansprüche 1 bis 14, dadurch gekennzeichnet, daß zwischen der inneren Kante (23) des Gehäuse-Ausschnitts (15) einerseits und dem unteren Plattenrand (35) des Schiebers (30) andererseits ein Rastgesperre (57, 58) angeordnet ist, welches ggf. eine Vorraststellung (61) aufweist und durch eine auf den Schieber (30) im Ausschubsinne (60) wirksame Kraft lösbar ist, (Fig. 2, 3).

16. Dose nach einem oder mehreren der Ansprüche 1 bis 15, dadurch gekennzeichnet, daß ein Träger (18) für elektrische Bauelemente, wie ein Sicherungs- und/oder Relaisträger, zwar an seinem einen Trägerrand über Steckverbindungen (24) an der Gehäusewand positioniert ist, aber mit seinem gegenüberliegenden Trägerrand (19) sich an einer Konsole (29) der Gehäusewand (11) abstützt und an der Konsole (29) ggf. ein den Träger fixierendes Riegelsperre (28) sitzt, welches von der Schalenöffnung (13) aus manuell in Freigabeposition überführbar ist, (Fig. 1).

17. Dose nach einem oder mehreren der Ansprüche 1 bis 16, dadurch gekennzeichnet, daß das Schenkelprofil des gehäuseseitigen Führungsschenkels (51) gegenüber der Öffnungsweite der ihn aufnehmenden Öffnung (44) im Schieber (30) zu Beginn der Einschubbewegung (34) ein größeres Spiel aufweist, als in voller Einschublage des Schiebers (30).

## Claims

1. Engine compartment socket for receiving electrical components such as couplings, fuses, relays or the like and their wire connections,
with a shell-like housing (10) which comprises a shell opening (13) and can be mounted in the engine compartment and which in its wall has knocked-out portions (16, 36; 17, 37) for feeding wires through,
with a cover (20) closing the shell opening (13) of the housing (10),
with a cut-out (15) in the housing wall starting from the shell opening (13) and with a plate-shaped slide (30) which closes the cut-out (15) and which is releasable from the housing (10),
wherein the slide (30) on its two plate edges (31, 32) pointing in the direction of sliding (34) has profiles (40) with which are associated counterprofiles (50) in the wall zones (11, 12) of the housing (10) which define the cut-out (15) on both longitudinal sides,
characterised
in that the two counterprofiles (50) on the housing (10) are constructed in a V shape of which one V-arm is produced in each case by the two wall zones (11, 12) of the housing itself, whose two V-apices define the two longitudinal edges (21, 22) of the cut-out (15) and whose other, free V-arm is in each case bent back, pointing away from the cut-out longitudinal edge (21, 22), and in each case forms a continuous guide arm (51) for the associated profile (40) of the slide (30),
and in that the profiles (40) on the two plate edge surfaces (31, 32) of the slide (30) are in each case combined from two different profile elements,
wherein the first profile element consists of a U-shaped hook profile (41) which projects beyond the plate edge surface (31 or 32) of the slide (30) and runs at an angle to the plane (25, 26) of the plate edge surface (31, 32),
while the second profile element is formed by a projecting strip profile (42) which runs parallel to the plate edge surface (32, 31) and which, seen in projection on the longitudinal edge side, forms with the hook profile (41) a V-shaped receptacle (54) for the counterprofile (50) of the housing (10).

2. Socket according to claim 1, characterised in that the two profile elements (41, 42) are arranged in sections and alternate with each other on the two plate edge surfaces (31, 32),
and, seen in the direction of insertion (34), on one plate edge surface (32) of the slide (30) is first arranged a section of the hook profile (41), which is then followed by a section of the strip profile (42),
but on the other plate edge surface (31) of the slide (30), conversely, is initially located a section of the strip profile (42), which is followed by a section of the hook profile (41).

3. Socket according to claim 1 or 2, characterised in that the section of the hook profile (41) of the slide (30) for its part consists of two differently profiled pieces (46, 47), namely, seen in the direction of insertion (34), first a conically profiled initial piece (47) and then an identically profiled end piece (46) (Figs. 8 and 13).

4. Socket according to one or more of claims 1 to 3, characterised in that in the conical initial piece (47) the hook opening (44) of the U-shaped hook profile (41) tapers towards the end piece (46) both with respect to the inside width (49) of the U and with respect to the inside depth (53) of the U (Figs. 9 to 12).

5. Socket according to one or more of claims 1 to 4, characterised in that in the inserted position of the slide (30) the inner surface of its section with strip profile (42) on the one hand and the end face at the hook end (45) of its section with hook profile (41) on the other hand touch the inner and outer surfaces of the wall zone (12) belonging to the counterprofile (50) of the housing (10) (Figs. 9 to 12).

6. Socket according to one or more of claims 1 to 5, characterised in that, seen in the inserted position of the slide (30), the guide arm (51) of the counterprofile (50) of the housing (10) is, in the end piece (46) of the section with hook profile (41), in contact with the inner surfaces of the U-shaped hook profile, but has at least in some regions a lateral clearance from the inner surfaces of the conical initial piece (47) of the section with hook profile (41) (Figs. 9 and 12).

7. Socket according to one or more of claims 1 to 6, characterised in that, seen in the direction of insertion (34) of the slide (30), the guide arm (51) of the V-shaped counterprofile (50) has an arm profile which varies continuously with respect to the arm length (55) and/or the arm thickness (56) and/or the arm inclination (52, 52').

8. Socket according to claim 7, characterised in that the groove of the V-shaped counterprofile (50) at the inner end of the housing cut-out (15) has a smaller groove depth (53) than at the opposite outer end of the cut-out (Figs. 9 and 17).

9. Socket according to claim 7 or 8, characterised in that the guide arm (51) of the V-shaped counterprofile (50) has an arm thickness (56) which increases in a wedge shape from the inner end of the cut-out (15) to the opposite outer end of the cut-out (Figs. 12 and 15).

10. Socket according to one or more of claims 1 to 9, characterised in that on each of the two plate edge surfaces (31, 32) of the slide (30) are seated two sections with hook profile (41), between which is arranged a section with strip profile (42) (Figs. 3 and 4).

11. Socket according to one or more of claims 1 to 10, characterised in that at the upper end of the two plate edge surfaces (31, 32) of the slide (30), seen in the direction of insertion (34) of the slide (30), are seated in each case sections with hook profile (41) (Figs. 3, 4).

12. Socket according to one or more of claims 1 to 11, characterised in that the socket is constructed in a manner inversely symmetrical to claim 1, namely the plate edge surfaces of the slide are bent back towards each other in a V shape and each form a continuous guide arm, while the counterprofiles on the housing consist of sections with U-shaped hook profile and sections with strip profile running parallel to the wall zone, essentially alternating with each other.

13. Socket according to one or more of claims 1 to 12, characterised in that the slide (30) comprises a non-flat, preferably inherently offset plate (33), and its two profiled plate surfaces (31, 32) run at an angle (27) to each other (Fig. 5).

14. Socket according to one or more of claims 1 to 13, characterised in that all the piercings for feeding wires through consist of knocked-out portions (16, 36; 17, 37) complementing each other in pairs at the inner edge (23) of the housing cut-out (15) on the one hand and at the lower plate edge (35) of the slide (30) on the other hand (Figs. 1 to 4).

15. Socket according to one or more of claims 1 to 14, characterised in that between the inner edge (23) of the housing cut-out (15) on the one hand and the lower plate edge (35) of the slide (30) on the other hand is arranged a latching catch (57, 58) which if necessary has a prelatch position (61) and is releasable by a force operating on the slide (30) in the direction of sliding out (60) (Figs. 2, 3).

16. Socket according to one or more of claims 1 to 15, characterised in that a support (18) for electrical components such as a fuse and/or relay support is in fact positioned at one support edge by insertion connections (24) on the housing wall, but with its opposite support edge (19) is supported on a bracket (29) of the housing wall (11), and on the bracket (29) is seated if necessary a locking catch (28) which fixes the support and which can be transferred manually to the release position from the shell opening (13) (Fig. 1).

17. Socket according to one or more of claims 1 to 16, characterised in that the arm profile of the guide arm (51) on the housing in relation to the opening width of the opening (44) in the slide (30) which receives it has a greater clearance at the beginning of the insertion movement (34) than in the fully inserted position of the slide (30).

## Revendications

1. Boîte pour compartiment moteur, destinée au logement de composants électriques, tels que raccords de connexion, fusibles, relais ou analogues et leurs bornes de connexion de ligne, comprenant
un boîtier (10) en forme de cuvette qui comporte une ouverture de cuvette (13), pouvant être fixé dans le compartiment moteur et comportant des découpes (16, 36 ; 17, 37) dans sa paroi pour le passage de lignes électriques,
un couvercle (20) obturant l'ouverture de cuvette (13) du boîtier (10),
une découpe (15) ménagée dans la paroi de boîtier et partant de l'ouverture de cuvette (13) et
un volet coulissant (30) en forme de plaquette qui obture la découpe (15) et peut être séparé du boîtier (10),
le volet coulissant (30) comportant, sur ses deux bords de plaquette (31, 32) orientés suivant la direction de coulissement (34), des formes profilées (40) auxquelles sont associées des formes profilées complémentaires (50) situées dans les zones de paroi (11, 12) du boîtier (10) qui délimitent la découpe (15) sur les deux côtés longitudinaux,
caractérisée en ce que les deux formes profilées complémentaires (50) situées sur le boîtier (10) ont une forme de V dont, pour chaque forme profilée complémentaire, une première aile de V respective est formée par l'une des deux zones de paroi (11, 12) du boîtier elle-même, dont les deux sommets des V constituent les deux arêtes longitudinales (21, 22) de la découpe (15) et dont, pour chaque forme profilée complémentaire, l'autre aile libre de V respective est pliée en arrière en s'éloignant de l'arête longitudinale de découpe (21, 22) et constitue une aile de guidage (51) continue respective pour la forme profilée (40) du volet coulissant (30) qui lui est associée, et
en ce que les formes profilées (40) situées sur les deux surfaces marginales de plaquette (31, 32) du volet coulissant (30) sont constituées chacune par la combinaison de deux éléments de forme profilée différents,
le premier élément de forme profilée consistant en une forme profilée en crochet (41) en forme de U qui fait saillie sur la surface marginale de plaquette (31 ou 32) du volet coulissant (30) et qui s'étend en faisant un certain angle avec le plan (25, 26) de la surface marginale de plaquette (31, 32),
tandis que le second élément profilé consiste en une forme profilée en nervure (42) en saillie qui s'étend parallèlement à la surface de bord de plaquette (32, 31) et qui, vue en projection suivant la direction du bord longitudinal, forme avec la forme profilée en crochet (41) un logement (54) en forme de V pour la forme profilée complémentaire (50) du boîtier (10).

2. Boîte suivant la revendication 1, caractérisée en ce que les deux éléments de forme profilée (41, 42) sont disposés, par sections et d'une manière alternée entre eux, sur les deux surfaces marginales de plaquette (31, 32),
et, vu suivant la direction d'introduction par coulissement (34), sur une première surface marginale de plaquette (32) du volet coulissant (30), il est d'abord prévu une section de la forme profilée en crochet (41) à laquelle se raccorde ensuite une section de la forme profilée en nervure (42), mais, inversement, sur l'autre surface marginale de plaquette (31) du volet coulissant (30), il est d'abord prévu une section de la forme profilée en nervure (42) que suit une section de la forme profilée en crochet (41).

3. Boîte suivant la revendication 1 ou 2, caractérisée en ce que la section de la forme profilée en crochet (41) du volet coulissant (30) est elle-même constituée de deux tronçons partiels (46, 47) de formes profilées différentes, a savoir, vus suivant la direction d'introduction par coulissement (34), en premier lieu un tronçon initial (47) de forme profilée conique, puis un tronçon final (46) de forme profilée constante (figures 8 et 13).

4. Boîte suivant une ou plusieurs des revendications 1 à 3, caractérisée en ce que, dans le tronçon initial conique (47), l'ouverture de crochet (44) de la forme profilée en crochet (41) en forme de U va en rétrécissant, en direction du tronçon final (46), à la fois en ce qui concerne la largeur libre de U (49) et en ce qui concerne la profondeur libre de U (53)(figures 9 à 12).

5. Boîte suivant une ou plusieurs des revendications 1 à 4, caractérisée en ce que, dans la position d'introduction par coulissement du volet coulissant (30), la surface intérieure de sa section à forme profilée en nervure (42) d'une part et la surface frontale située à l'extrémité de crochet (45) de sa section à forme profilée en crochet (41) d'autre part sont au contact de la surface intérieure et de la surface extérieure de la zone de paroi (12) associée à la forme profilée complémentaire (50) du boîtier (10) (figures 9 à 12).

6. Boîte suivant une ou plusieurs des revendications 1 à 5, caractérisée en ce que, bien que, vue dans la situation d'introduction par coulissement du volet coulissant (30), l'aile de guidage (51) de la forme profilée complémentaire (50) du boîtier (10) soit en contact, dans le tronçon final (46) de la section à forme profilée en crochet (41), avec les surfaces intérieures de la forme profilée en crochet en forme de U, elle présente toutefois, au moins par endroits, un jeu latéral par rapport aux surfaces intérieures du tronçon initial conique (47) de la section à forme profilée en crochet (41) (figures 9 et 12).

7. Boîte suivant une ou plusieurs des revendications 1 à 6, caractérisée en ce que, vue suivant la direction d'introduction par coulissement (34) du volet coulissant (30), l'aile de guidage (51) de la forme profilée complémentaire (50) en forme de V comporte une forme profilée d'aile variant d'une manière continue en ce qui concerne la longueur d'aile (55) et/ou l'épaisseur d'aile (56) et/ou l'inclinaison d'aile (52, 52').

8. Boîte suivant la revendication 7, caractérisée en ce que, à l'extrémité intérieure de la découpe de boîtier (15), la gorge en V de la forme profilée complémentaire (50) présente une profondeur de gorge (53) plus petite qu'à l'extrémité extérieure opposée de la découpe (figures 9 et 17).

9. Boîte suivant la revendication 7 ou 8, caractérisée en ce que l'aile de guidage (51) de la forme profilée complémentaire (50) en forme de V a une épaisseur d'aile (56) qui croît en forme de coin de l'extrémité intérieure de la découpe (15) à l'extrémité extérieure opposée de la découpe (figures 12 et 15).

10. Boîte suivant une ou plusieurs des revendications 1 à 9, caractérisée en ce que, sur chacune des deux surfaces marginales de plaquette (31, 32) du volet coulissant (30), il est prévu deux sections respectives à forme profilée en crochet (41) entre lesquelles est disposée une section à forme profilée en nervure (42) (figures 3 et 4).

11. Boîte suivant une ou plusieurs des revendications 1 à 10, caractérisée en ce qu'à l'extrémité de chacune des deux surfaces marginales de plaquette (31, 32) du volet coulissant (30) qui est l'extrémité supérieure vue suivant la direction d'introduction par coulissement (34) du volet coulissant (30), il est prévu une autre section respective à forme profilée en crochet (41) (figures 3, 4).

12. Boîte suivant une ou plusieurs des revendications 1 à 11, caractérisée en ce que la boîte est agencée d'une manière symétrique par rapport à la revendication 1, ce qui signifie que les surfaces marginales de plaquette du volet coulissant sont pliées en arrière l'une vers l'autre en forme de V et forment chacune une aile de guidage continue, tandis que les formes profilées complémentaires situées sur le boîtier sont constituées de sections à forme profilée en crochet en forme de U et de sections à forme profilée en nervure s'étendant parallèlement à la zone de paroi, qui sont disposées essentiellement d'une manière alternée entre elles.

13. Boîte suivant une ou plusieurs des revendications 1 à 12, caractérisée en ce que le volet coulissant (30) comporte une plaquette (33) non plane, de préférence coudée en elle-même, et ses deux surfaces de plaquette (31, 32) de forme profilée s'étendent en faisant un angle (27) entre elles (figure 5).

14. Boîte suivant une ou plusieurs des revendications 1 à 13, caractérisée en ce que toutes les découpes servant au passage de lignes électriques sont constituées de découpes (16, 36 ; 17, 37), se complétant entre elles par paires, situées d'une part sur l'arête intérieure (23) de la découpe de boîtier (15) et d'autre part sur le bord de plaquette inférieur (35) du volet coulissant (30) (figures 1 à 4).

15. Boîte suivant une ou plusieurs des revendications 1 à 14, caractérisée en ce qu'entre l'arête intérieure (23) de la découpe de boîtier (15) d'une part et le bord de plaquette inférieur (35) du volet coulissant (30) d'autre part, il est prévu un verrou à enclenchement (57, 58) qui comporte éventuellement une position de pré-enclenchement (61) et qui peut être libéré au moyen d'une force agissant sur le volet coulissant (30) dans le sens de l'extraction par coulissement (60) (figures 2, 3).

16. Boîte suivant une ou plusieurs des revendications 1 à 15, caractérisée en ce que, bien qu'un support (18) pour composants électriques, tels qu'un support de fusibles et/ou un support de relais, soit positionné sur son premier bord de support au moyen d'éléments de solidarisation par emboîte ment (24) sur la paroi de boîtier, il prend appui, par son bord de support (19) opposé, sur une partie en forme de console (29) de la paroi de boîtier (11), tandis que, sur la partie en forme de console (29), il est éventuellement prévu un verrou (28) qui fixe le support et qui, par l'ouverture de cuvette (13), peut être amené manuellement dans une position de libération (figure 1).

17. Boîte suivant une ou plusieurs des revendications 1 à 16, caractérisée en ce que la forme profilée d'aile de l'aile de guidage côté boîtier (51) présente, vis-à-vis de la largeur d'ouverture de l'ouverture (44) du volet coulissant (30) qui la reçoit, et au début du déplacement d'introduction par coulissement (34), un jeu plus grand que dans la position complètement introduite par coulissement du volet coulissant (30).
